(19) Europäisches Patentamt
European Patent Office
Office européen des brevets

(11) **EP 0 786 671 B1**

(12) **FASCICULE DE BREVET EUROPEEN**

(45) Date de publication et mention
de la délivrance du brevet:
**10.07.2002 Bulletin 2002/28**

(51) Int Cl.[7]: **G01V 1/38**

(21) Numéro de dépôt: **97400139.8**

(22) Date de dépôt: **22.01.1997**

(54) **Procédé de prospection sismique marine au moyen d'un couple de capteurs hydrophone et géophone**

Verfahren zur seismischen Erkundung des Meeresbodens unter Verwendung eines Hydrophon-Geophon Paares

Process for underwater seismic prospection using a hydrophone-geophone sensor pair

(84) Etats contractants désignés:
**FR GB NL**

(30) Priorité: **23.01.1996 FR 9600720**

(43) Date de publication de la demande:
**30.07.1997 Bulletin 1997/31**

(73) Titulaire: **COMPAGNIE GENERALE DE GEOPHYSIQUE**
**F-91300 Massy (FR)**

(72) Inventeur: **Soubaras Robert**
**91400 Orsay (FR)**

(74) Mandataire: **Martin, Jean-Jacques et al**
**Cabinet Régimbeau**
**20, rue de Chazelles**
**75847 Paris cedex 17 (FR)**

(56) Documents cités:
**US-A- 4 486 865          US-A- 4 887 244**
**US-A- 5 365 492          US-A- 5 396 472**

• **WORLD OIL, vol. 216, no. 10, 1 Octobre 1995, page 91/92, 94, 96, 98 XP000596468 CAFARELLI B: "SUBSURFACE IMAGING WITH OCEAN BOTTOM SEISMIC"**
• **59TH MEETING OF THE SOCIETY OF EXPLORATION GEOPHYSICISTS; EXPANDED ABSTRACTS., 1989, pages 653-656, XP000672198 F. J. BARR ET AL.: "Attenuation of water-column reverberation using pressure and velocity detectors in a water-bottom cable."**

EP 0 786 671 B1

**Description**

La présente invention est relative à un procédé de filtrage de prospection sismique au moyen de capteurs hydrophones/géophones.

On utilise généralement en sismique marine des câbles portant des capteurs hydrophones qui sont tractés par des navires qui portent également des sources acoustiques.

Ces câbles (appelés "streamer" selon la terminologie anglo-saxonne généralement utilisée) ne peuvent être utilisés dans certaines zones, et notamment dans les zones de production encombrées de plates-formes.

On utilise alors pour la réception des ondes acoustiques émises par les navires des hydrophones disposés sur le fond de la mer.

Dans ces différentes techniques, les enregistrements réalisés par les hydrophones doivent être traités de façon à supprimer dans le signal obtenu les réflexions fantômes (réflexions des ondes primaires qui portent l'information sur la géologie du sous-sol à la surface de l'eau, appelées "ghost" selon la terminologie anglo-saxonne généralement utilisée), ainsi qu'éventuellement les réverbérations dites "peg-legs" correspondant à des réflexions multiples à la surface et au fond de l'eau, qui rendent les enregistrements difficiles à interpréter.

Spectralement, les ondes fantômes se traduisent par le filtrage des données utiles par un filtre qui annule le signal à des fréquences ("notches" selon la terminologie anglo-saxonne) multiples de $f_n = v/(2\Delta z)$, $\Delta z$ étant la profondeur des récepteurs et v la vitesse du son dans l'eau (1500 m/s).

Lorsque $\Delta z$ est inférieur à 10 m, ce qui est le cas d'une acquisition classique avec des hydrophones portés par un câble tracté par un navire, $f_n$ est supérieur à 75 Hz et ces zones sont en dehors de la bande passante utile. L'onde fantôme ne se traduit alors, dans la bande passante utile, que par des atténuations, qu'il est possible de supprimer par déconvolution.

Par contre, dans le cas de capteurs hydrophones disposés sur le fond de l'eau, $\Delta z$ est la profondeur de l'eau qui vaut typiquement 50 m, et $f_n = 15$ Hz. La bande passante est parsemée de fréquences pour lesquelles le signal de réponse est annulé par l'onde fantôme. Supprimer l'onde fantôme par déconvolution, conduit à un bruitage important des résultats.

Récemment, plusieurs techniques ont été proposées dans lesquelles l'acquisition est réalisée au moyen de capteurs hydrophones et géophones disposés sur le fond de la mer.

On connaît en particulier par US 4 486 865 un procédé d'acquisition sismique utilisant des hydrophones et géophones répartis par paire au fond de l'eau, dans lequel on déconvolue la composante hydrophone et la composante géophone d'une même paire de capteurs par leurs fonctions spectrales préalablement déterminées et on moyenne les données déconvoluées pour obtenir une sortie qui correspond à l'onde montante juste au dessus du fond de la surface de l'eau, dans laquelle les ondes fantômes ont été supprimées.

Néanmoins, ce procédé ne peut être utilisé dans les zones de grande profondeur, pour lesquelles la bande passante sismique est parsemée de fréquences pour lesquelles le signal de réponse est annulé par l'onde fantôme. Du fait de la déconvolution, la sortie serait alors en effet particulièrement bruitée.

Pour résoudre ce problème, il a été proposé dans US 4 979 150 un procédé de prospection sismique utilisant également des hydrophones et géophones, dans lequel un scalaire de calibration est appliqué à la composante hydrophone ou à la composante géophone et les composantes calibrées ainsi obtenues sont sommées.

Ce traitement vise à supprimer les ondes fantômes et les réverbérations de type "peg-legs" sans avoir à mettre en oeuvre de déconvolution sur les enregistrements hydrophones et géophones.

Toutefois, le signal obtenu en sortie est tout aussi bruité que les enregistrements hydrophones et géophones, dont il est une fonction linéaire.

Un but de l'invention est de proposer une méthode qui permet de pallier les inconvénients des méthodes de l'art antérieur et en particulier de fournir des enregistrements non bruités.

L'invention propose à cet effet un procédé de fittrage de prospection sismique marine au moyen d'au moins un couple de capteurs hydrophone/géophone disposés au fond de l'eau, dans lequel une source sonore à la surface de l'eau émet une signal acoustique et les capteurs au fond de l'eau relèvent des enregistrements hydrophone H et géophone G, caractérisé par les différentes étapes suivantes :

- on détermine un signal filtré tel que

$$M = H_\Delta - G_\Sigma$$

avec

$$H_\Delta = \frac{H - H_R}{2}$$

$$G_\Sigma = \frac{G + G_R}{2}$$

où $H_R$ et $G_R$ correspondent respectivement aux enregistrements H et G propagés à travers un aller-retour dans la couche d'eau.

On notera, ainsi qu'on le comprendra mieux à la lecture de la description qui suit, que le filtrage correspondant à M est un filtrage adapté, par conséquent peu bruité.

Avantageusement, également,

- on détermine en fonction des enregistrements hydrophone H et géophone G, un signal S qui correspond au signal source propagé à travers la couche d'eau jusqu'aux capteurs ;
- on tronque ce signal S dans une fenêtre temporelle au delà d'un temps théorique d'extinction de la source propagée à travers la couche d'eau jusqu'aux capteurs.

Du fait de cette troncature, la source propagée est également peu bruitée.

D'autres caractéristiques et avantages de l'invention ressortiront encore de la description qui suit. Cette description est purement illustrative et non limitative. Elle doit être lue en regard des dessins annexés sur lesquels :

- la figure 1 illustre schématiquement les différentes grandeurs intervenant dans la modélisation utilisée pour le procédé proposé par l'invention ;
- la figure 2 est un schéma synoptique illustrant une mise en oeuvre possible pour le procédé conforme à l'invention ;
- les figures 3a à 3o illustrent, pour un signal source impulsionnel, les différents signaux obtenus dans les différentes étapes du procédé proposé par l'invention ;
- les figures 4a et 4b illustrent un mode de mise en oeuvre possible du procédé conforme à l'invention.

PRESENTATION GENERALE

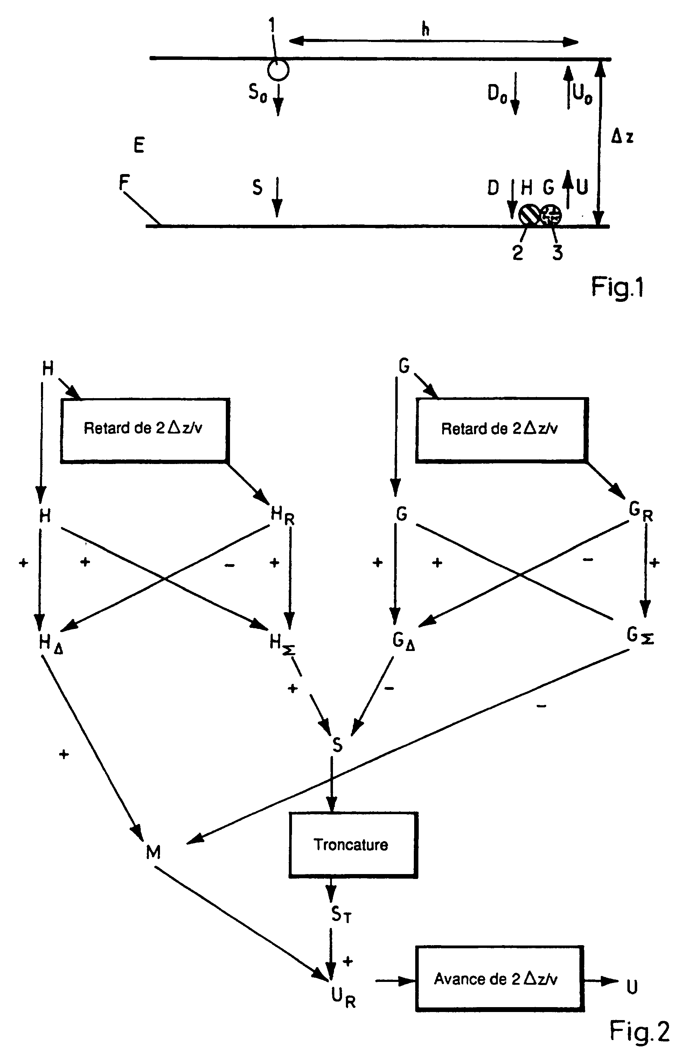

On a illustré sur la figure 1 une source acoustique 1 émettant un signal $S_0$ à la surface d'une couche d'eau E, ainsi que des capteurs hydrophones 2 et géophones 3 disposés sur un fond marin F. La couche d'eau E présente une épaisseur $\Delta z$. On a référencé par h le décalage horizontal entre les capteurs 2 et 3 et la source 1.

Les capteurs hydrophones 2 mesurent la pression et sont isotropes. Ils enregistrent la somme des ondes acoustiques montantes U et descendantes D.

Les signaux H et G enregistrés par les hydrophones 2 et les géophones 3 s'écrivent, en fonction des ondes montantes U et des ondes descendantes D :

$$H = U + D \tag{1}$$

$$G = (U - D)/I_0 \tag{2}$$

Dans l'équation (2), $I_0$ est l'impédance acoustique de l'eau $I_0 = \rho \nu$ où $\rho$ est la densité de l'eau et $\nu$ la vitesse de son dans l'eau.

Dans la suite du présent texte, on normalise $I_0$ à 1, le géophone étant préalablement calibré pour mesurer u - D.

La surface de l'eau se comporte comme un réflecteur de coefficient de réflexion -1 et ajoute au signal correspondant à la source $S_0$ une onde descendante égale à l'onde montante U, mais de signe opposé.

Au niveau du fond de l'eau, l'onde descendante s'écrit par conséquent :

$$D = -ZU + Z^{1/2} S_0 \tag{3}$$

où Z est un opérateur correspondant à une propagation aller-retour dans la couche d'eau, c'est à dire à un retard d'un

temps $\Delta t = 2\Delta z/v$, v étant la vitesse du son dans la couche d'eau, et où $Z^{1/2}$ est un opérateur correspondant à une propagation aller du son entre la surface et le fond de l'eau.

Dans le cas de l'approximation 1-D, Z est simplement un retard d'un temps $\Delta t = 2\Delta z/v$ et $Z^{1/2}$ un retard de temps $\Delta z/v$.

En notation fréquentielle $Z = e^{-2j\pi f\Delta t}$.

Si on prend en compte les effets de propagation 2-D ou 3-D, on aurait dans le domaine $(\omega,k)$ avec $\omega = 2\pi f$ où $f$ est la fréquence du signal, k le nombre d'onde :

$$Z = e^{-2j\Delta z \frac{\omega}{v} \sqrt{1 - v^2 k^2/\omega^2}} \tag{4}$$

En définissant la source propagée S par :

$$S = Z^{1/2} S_0$$

l'expression de D devient :

$$D = S - ZU \tag{5}$$

et reportant (6) dans (1) et (2) on obtient les équations de modélisation suivantes :

$$H = S + (1 - Z) U \tag{6}$$

$$G = -S + (1 + Z) U \tag{7}$$

Par conséquent S s'écrit :

$$S = \frac{1 + Z}{2} H - \frac{1 - Z}{2} G \tag{8}$$

Pour chaque position de la source et position d'un couple de capteurs, on peut calculer le temps d'arrivée $T_S$ de la source sismique, $T_s = (\Delta z^2 + h^2)^{1/2}/v$, et son temps d'extinction $T_E = T_S + \Delta T_S$, $\Delta T_S$ étant la durée de la source 1.

La vraie source propagée doit être nulle au delà du temps d'extinction $T_E$. La source S calculée par l'équation (8) présente deux types d'erreurs par rapport à la source théorique : d'une part, elle contient du bruit aléatoire provenant des bruits aléatoires qui affectent les données hydrophone et géophone, d'autre part l'opérateur de propagation Z utilisé n'est pas forcément exact.

Si les données hydrophone et géophone sont bien calibrées, la source S estimée par (8) peut par conséquent être tronquée au delà du temps d'extinction de la source propagée et dans la zone de validité de l'opérateur de propagation. Cette mise à zéro du bruit aléatoire a pour effet de réduire le bruit aléatoire sur la sortie U.

A partir des données H et G, on peut aussi calculer la sortie auxiliaire M :

$$M = \frac{1 - Z}{2} H - \frac{1 + Z}{2} G \tag{9}$$

Les équations (6) et (7) montrent que l'hydrophone H mesure U filtré par (1-Z) et que le géophone mesure G filtré par (1+Z). La sortie auxiliaire M est donc un filtrage adapté et est par conséquent peu bruitée.

En remplaçant dans (9), H et G par leurs expressions (6) et (7), on voit que M mesure :

$$M = S - 2ZU \tag{10}$$

On peut donc déduire U à partir de S et de M.

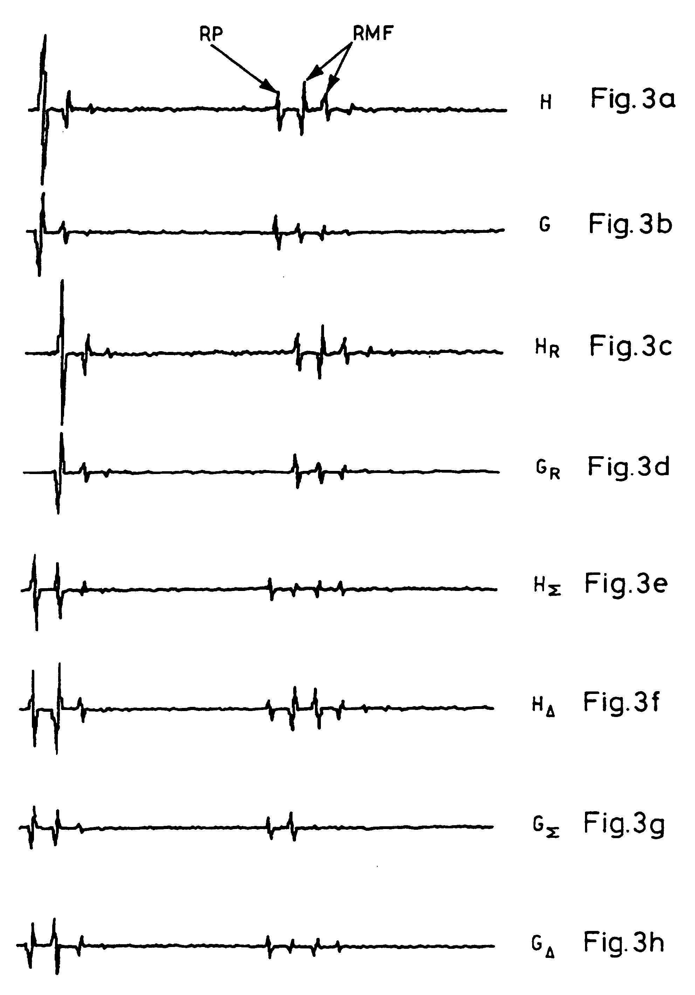

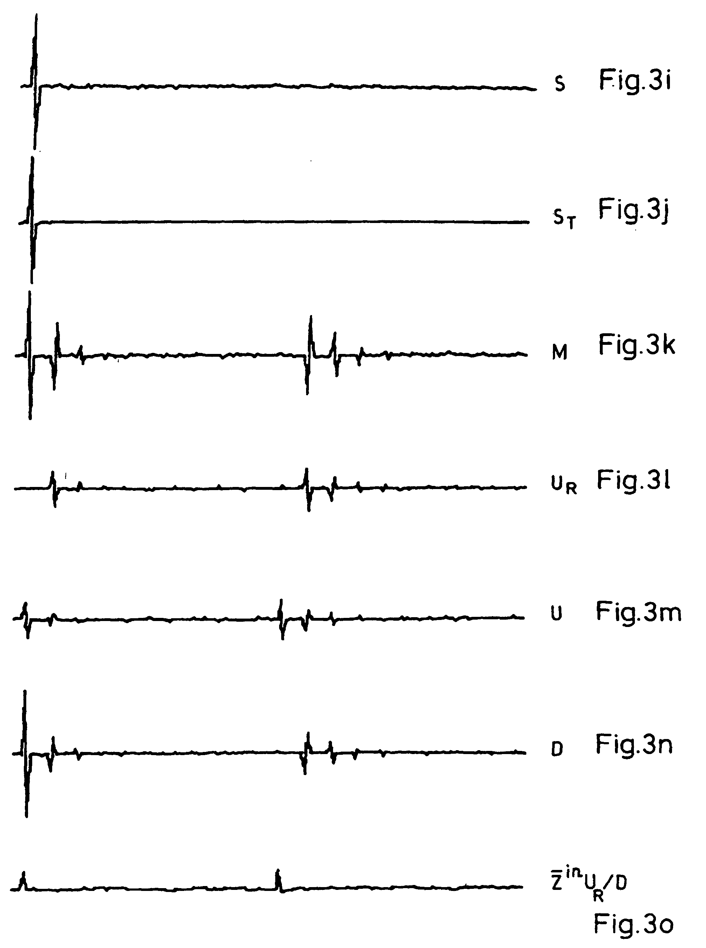

Le calcul de l'onde montante U se fait, ainsi qu'illustré sur la figure 2, de la façon qui va maintenant être décrite. On a illustré sur les figures 3a à 3o les différents signaux obtenus à l'issue des différentes étapes de traitement de cette mise en oeuvre de l'invention.

On a représenté en particulier sur la figure 3a et la figure 3b les enregistrements hydrophone et géophone obtenus. Sur la figure 3a, on a indiqué les réflexions primaires RP, ainsi que les réflexions fantômes et multiples du type "peg-leg" RMF.

On calcule $H_R$ et $G_R$ (figures 3c, 3d), qui sont les données hydrophone et géophone propagées à travers un aller-retour dans la couche d'eau :

$$H_R = ZH \qquad (11)$$

$$G_R = ZG \qquad (12)$$

Puis on calcule (figures 3e à 3h) les voies somme et différence hydrophone et géophone par :

$$H_\Sigma = \frac{H + H_R}{2} \qquad (13)$$

$$H_\Delta = \frac{H - H_R}{2} \qquad (14)$$

$$G_\Sigma = \frac{G + G_R}{2} \qquad (15)$$

$$G_\Delta = \frac{G - G_R}{2} \qquad (16)$$

On calcule ensuite la source (figure 3i) et la source tronquée (figure 3j) par :

$$S = H_\Sigma - G_\Delta \qquad (17)$$

$$S_T = S \text{ tronquée} \qquad (18)$$

$S_T$ se calcule en tronquant S dans une fenêtre temporelle au delà du temps d'extinction de la source $T_E$ et dans la zone de validité de l'opérateur de propagation Z utilisé en (11) et (12). Cette zone de validité est en général définie, pour chaque position source et position récepteur, par un temps de validité $T_p$ au delà duquel l'approximation est valable. $S_T$ se calcule donc dans ce cas en mettant à zéro les données de S pour les temps supérieurs à MAX($T_E$, $T_p$).

On calcule ensuite la sortie filtrage adapté (figure 3k)

$$M = H_\Delta - G_\Sigma \qquad (19)$$

puis, l'onde montante retardée (figure 3l):

$$U_R = \frac{S_T - M}{2} \qquad (20)$$

Finalement, on calcule l'onde montante (figure 3m) :

$$U = Z^{-1} U_R \qquad (21)$$

En approximation 1-D, Z est un retard d'un temps $2\Delta z/v$ et $Z^{-1}$ une avance d'un temps $2\Delta z/v$, c'est-à-dire que (11), (12) et (21) peuvent s'écrire :

$$H_R (t) = H (t - \frac{2\Delta z}{v}) \qquad (11')$$

$$G_R (t) = G (t - \frac{2\Delta z}{v}) \qquad (12')$$

$$U(t) = U_R (t + \frac{2\Delta z}{v}) \qquad (21')$$

L'onde fantôme est supprimée sur la sortie U, qui en outre présente un bruit atténué car elle est calculée à partir de $S_T$, qui est faiblement bruitée car la troncature élimine une bonne partie du bruit, et M qui est faiblement bruitée car correspondant à un filtre adapté.

Les réflexions multiples "peg-legs" peuvent être enlevées par un traitement ultérieur. En effet, elles se manifestent de la même manière sur les données hydrophone et géophone. Les sorties U obtenues peuvent par conséquent être traitées de la même manière que des données sismiques conventionnelles.

L'onde descendante D se calcule par (figure 3n) :

$$D = \frac{S_T - M}{2} \qquad (22)$$

On peut enlever les réflexions multiples peg-legs liés à la position récepteurs en estimant l'onde montante $U_1$ juste au dessous de l'eau.

$U_1$ se calcule par

$$U_1 = \frac{U - kD}{1 - kD}$$

où k est le coefficient de réflexion du fond de l'eau.

Dans la pratique on peut calculer une fonction de transfert du fond de l'eau k(t) de support temporel donné, puis

$$U_1 = U - k * D$$

où * désigne l'opération de convolution.

La fonction de transfert du fond de l'eau k(t) peut se calculer en minimisant l'énergie de $U_1$ dans une fenêtre temporelle donnée.

Deux cas peuvent se présenter :

- soit le réflecteur du fond de l'eau est isolé, auquel on prend une fenêtre qui ne contient que ce réflecteur ;
- soit les réflecteurs qui suivent le fond de l'eau sont trop proches pour être isolés de celui-ci, auquel cas on prend une grande fenêtre contenant un grand nombre de réflecteurs.

Les réflexions multiples peg-legs peuvent aussi être enlevées par une déconvolution des ondes montantes U par les ondes descendantes D. Cette opération enlève toutes les réflexions multiples se réfléchissant à la surface de l'eau ainsi que la source sismique.

## OPERATEURS DE PROPAGATION BI- OU TRI-DIMENSIONNELS

On va maintenant décrire la mise en oeuvre de l'invention avec des opérateurs Z de propagation aller-retour dans la couche d'eau (fond de l'eau-surface de l'eau-fond de l'eau) bidimensionnels ou tridimensionnels

Par exemple, une fois la calibration de tous les géophones effectués, on range les données en collection point de tir commun en rassemblant toutes les traces sismiques pour lesquelles la position de la source est la même. On obtient ainsi le champ d'onde au fond de l'eau $H(\Delta z,t,x,y)$ et $G(\Delta z,t,x,y)$, où $x$ et $y$ désignent des coordonnées dans le plan du fond de l'eau et où $t$ est la variante temporelle.

L'estimation des ondes montantes U, ainsi que des ondes descendantes D juste au-dessus du fond de l'eau, dépourvues d'ondes fantômes ("deghosting" selon la terminologie anglo-saxonne utilisée par l'Homme du Métier) peut alors se faire en considérant la nature bi- ou tridimensionnelle de la propagation des ondes.

Dans le cas tridimensionnel, la pression $H(z,\omega,k_x,k_y)$ mesurée à la profondeur z, où $\omega = 2\pi f$, $k_x$ et $k_y$ sont les variables de Fourier correspondant à t, x et y, peut aussi s'écrire comme la somme d'une onde montante et d'une onde descendante. Avec les notations :

$$k^2 = k_x{}^2 + k_y{}^2$$

$U_0(\omega, k_x, k_y)$ = onde montante à la surface de l'eau.

$D_0(\omega, k_x, k_y)$ = onde descendante à la surface de l'eau.

$\rho$ = densité de l'eau.

On peut écrire :

$$H(z,\omega,k_x,k_y)=$$

$$U_0(\omega,k_x,k_y)e^{jz(\omega/v)\sqrt{(1\_v^2k^2)/\omega^2}} + D_0(\omega,k_x,k_y)e^{-jz(\omega/v)\sqrt{(1\_v^2k^2)/\omega^2}} \qquad (23)$$

La loi de Newton lie la dérivée temporelle du vecteur vitesse $\vec{V}$ aux dérivées spatiales de la pression p :

$$\rho \frac{\partial}{\partial t} \vec{V} = - \nabla p \qquad (24)$$

En particulier, pour la composante verticale z :

$$\rho \frac{\partial V_z}{\partial t} = - \frac{\partial p}{\partial z} \qquad (25)$$

Le géophone mesure la vitesse $-V_z$, c'est-à-dire l'opposé de la vitesse verticale, et l'hydrophone mesure la pression p. On a donc :

$$\rho \frac{\partial G}{\partial t} = j\omega\rho G = \frac{\partial H}{\partial z} \qquad (26)$$

c'est-à-dire en remplaçant H par son expression (23) :

$$G(z,\omega,k_x,k_y)$$

$$= (\sqrt{1-v^2k^2/\omega^2}\ /\rho v)\left[U_0(\omega,k_x,k_y)\ \cdot\ e^{jz\ (\omega/v)\ \sqrt{1-\ v^2k^2/\omega^2}}\right.$$

$$\left.-\ D_0(\omega,k_x,k_y)\ e^{-jz\ (\omega/v)\ \sqrt{1-v^2k^2/\omega^2}}\right]\qquad\qquad(27)$$

Une onde dont la direction de propagation fait un angle $\theta$ avec la verticale est définie dans le domaine $(\omega, k_x, k_y)$ par $k = \omega\sin\theta/v$. Donc :

$$\sqrt{1 - v^2k^2/\omega^2} = \cos\theta \qquad\qquad (28)$$

Par ailleurs, l'impédance de l'eau est $I_0 = \rho v$.

Notons finalement U et D les ondes montantes et descendantes au fond de l'eau, à la profondeur $z = \Delta z$. On a alors :

$$U\ (\omega,k_x,k_y) = U_0\ (\omega,k_x,k_y)\ e^{j\Delta z\ (\omega/v)\ \sqrt{1 - v^2k^2/\omega^2}} \qquad\qquad (29)$$

$$D\ (\omega,k_x,k_y) = D_0\ (\omega,k_x,k_y)\ e^{-j\Delta z\ (\omega/v)\ \sqrt{1 - v^2k^2/\omega^2}} \qquad\qquad (30)$$

H et G mesurés au fond de l'eau vérifient alors :

$$H = U + D \qquad\qquad (31)$$

$$\frac{I_0}{\cos\theta}\ G = U - D \qquad\qquad (32)$$

En comparant les équations (31) et (32) avec les équations (1) et (2), on constate que dans le cas 2-D ou 3-D, pour se ramener au cas 1-D, on doit corriger la composante géophone, en divisant l'amplitude par $\cos\theta$. Ceci peut s'écrire, $G_{3D}$ étant la composante géophone mesurée :

$$G = \frac{G_{3D}}{\cos\theta} \qquad\qquad (33)$$

Une fois cette compensation réalisée, les équations (1) et (2) deviennent valables. Le traitement est donc identique, mais l'opérateur Z de propagation aller-retour dans la couche d'eau (fond-surface-fond), dont l'expression est $Z = e^{-2j\Delta z\omega/v}$ dans le cas 1-D, a dans le cas 2-D ou 3-D, l'expression suivante dans le domaine $(\omega, k_x, k_y)$ :

$$Z = e^{-2j\Delta z\ (\omega/v)\ \sqrt{1 - v^2k^2/\omega^2}} = e^{-2j\Delta z\ \omega\ \cos\theta/v} \qquad\qquad (34)$$

Les équations (33) et (34) sont valables dans les cas 1-D, 2-D et 3-D. Dans le cas 2-D, il faut poser $k_y = 0$, c'est-à-dire $k = k_x$, et dans le cas 1-D, $k_x = k_y = 0$, c'est-à-dire $k = 0$ et $\cos\theta = 1$.

Dans le cas d'un opérateur Z bi- ou tridimensionnel, on peut définir la zone de validité dudit opérateur dans

le domaine $(\omega,k)$ plutôt que par un temps de validité $Tp(i)$. Dans ce cas, la source tronquée $S_T$ se calcule en tronquant la source S pour les temps supérieurs à $T_E$, et en supprimant dans la partie tronquée, la zone du domaine $(\omega,k)$ où l'opérateur Z est valide.

Un exemple d'implémentation dans le domaine $(\omega,k_x,k_y)$ va maintenant être décrit :

1) Pour chaque position de la source sismique, rassembler les données $H(t,x,y)$ et $G(t,x,y)$ correspondant aux enregistrements effectués par les récepteurs hydrophone et géophone aux positions $(x,y)$ sur le fond de l'eau.
2) Effectuer la transformée de Fourier $(t,x,y) \rightarrow (\omega,k_x,k_y)$
3) Enlever les ondes évanescentes telle que $1-v^2k^2/\omega^2 < 0$ sur la transformée de Fourier h $(\omega,k_x,k_y)$ de $h(t,x,y)$.
4) Enlever les ondes évanescentes sur la transformée de Fourier g $(\omega,k_x,k_y)$ de $G(t,x,y)$ et diviser les ondes propagantes par $(1-v^2k^2/\omega^2)^{1/2}$.
5) Reprendre les étapes du cas 1-D, l'opérateur de propagation Z étant donné par (29).

L'opérateur de propagation Z peut aussi être appliqué dans le domaine $(\omega,x,y)$ ou $(t,x,y)$. Ceci permet de traiter le cas où le fond de l'eau est quelconque, sans avoir donc à faire l'hypothèse qu'il est plan et horizontal.

En effet, l'homme de l'art reconnaîtra dans l'opération S : $Z^{1/2}S_0$ une opération dite de "datuming" qui calcule l'enregistrement S d'une onde au fond de l'eau, à partir de l'enregistrement sur la surface de l'eau S de cette onde supposée descendante. Cette opération est l'extrapolation d'un champ d'une surface à une autre et peut se faire en particulier par la méthode de Kirchhoff. L'opération de datuming D = ZU doit être comprise comme la succession de 2 calculs : le calcul de l'enregistrement à la surface de l'eau $U_0$ de l'onde montante enregistrée au fond de l'eau U, suivi du calcul de l'enregistrement au fond de l'eau D d'une onde descendante dont l'enregistrement en surface serait $U_0$.

RAPPORT DE PUISSANCE DE BRUITS DE L'HYDROPHONE ET DU GEOPHONE

On s'intéresse dans la suite du texte au cas où les bruits de l'hydrophone et du géophone n'ont pas la même puissance

On peut supposer que les composantes hydrophone et géophones sont contaminées par des bruits additifs de densités spectrales de puissance $V_H(f)$ et $V_G(f)$. On suppose connu le rapport $A(f) = V_H(f)/V_G(f)$ de la puissance du bruit hydrophone à celle du bruit géophone pour chaque fréquence. Pour estimer ce rapport, on peut par exemple utiliser les données hydrophone et géophone avant les temps $T_s(i) = (\Delta z(i)^2+h(i)^2)^{1/2}/v$ correspondant à l'arrivée du signal et où donc il n'y a que du bruit. L'indice i correspond aux positions successives de la source.

Dans la méthode présentée précédemment, on a implicitement supposé $A(f) = 1$, c'est-à-dire que la composante hydrophone était aussi bruitée que la composante géophone. Or, assez souvent, la composante géophone est plus bruitée que la composante hydrophone, ce qui veut dire que $A(f) < 1$.

$A(f)$ peut être utilisé de manière que la sortie du traitement soit le moins bruitée possible.

En tenant compte des bruits sur les composantes hydrophones et géophones, les équations (6) et (7) deviennent :

$$H = (1-Z)\,U + N_H = T_H\,(f)\,U\,(f) + N_H\,(f) \tag{35}$$

$$G = (1+Z)\,U + N_G = T_G\,(f)\,U\,(f) + N_G\,(f) \tag{36}$$

où $N_H$ et $N_G$ (respectivement $N_H(f)$ et $N_G(f)$ désignent les bruits de H et G dans le domaine temporel (respectivement dans le domaine spectral).

En écrivant $T_H = 1 - Z$ et $T_G = 1 + Z$, on considère la surface de l'eau comme un miroir parfait de coefficient de réflexion -1. On peut également modéliser la surface de l'eau comme un réflecteur de fonction de transfert -r, r pouvant dépendre de f ou de f et de k. Pour cela, on remplace l'équation (5) par :

$$D = S - rZU \tag{5'}$$

On en déduit les nouvelles expressions de H, G et S remplaçant les équations (6) à (8) :

$$H = S + (1 - rZ) U \tag{6'}$$

$$G = -S + (1 + rZ) U \tag{7'}$$

$$S = \frac{1 + rZ}{2} H - \frac{1 - rZ}{2} G \tag{8'}$$

Les équations (35) et (36) étant toujours valables mais avec $T_H = 1 - rZ$ et $T_G = 1 + rZ$.

Prendre r#1 conduit en particulier à calculer des grandeurs intermédiaires $H_\Sigma$, $H_\Delta$, $G_\Sigma$, $G_\Delta$, qui ont pour expressions, à la place des expressions (13) à (16) :

$$H_\Sigma = \frac{H + rH_R}{2} \tag{13'}$$

$$H_\Delta = \frac{\bar{r}H - H_R}{2} \tag{14'}$$

$$G_\Sigma = \frac{\bar{r}G + G_R}{2} \tag{15'}$$

$$G_\Delta = \frac{G + rG_R}{2} \tag{16'}$$

Dans la suite on suppose r = 1 pour simplifier l'exposé, mais la démarche est la même pour r quelconque.

On peut calculer U($f$) par la méthode du maximum de vraisemblance en supposant les bruits $N_H(f)$ et $N_G(f)$ gaussiens. Ceci revient à minimiser pour tout $f$ :

$$E = \frac{|N_H(f)|^2}{V_H(f)} + \frac{|N_C(f)|^2}{V_G(f)} \tag{37}$$

ce qui permet d'obtenir l'équation suivante :

$$U(f) = \frac{\overline{T_H(f)} \, H(f) + A(f) \, \overline{T_C(f)} \, G(f)}{|T_H(f)|^2 + A(f) \, |T_G(f)|^2} \tag{38}$$

La notation désigne ici le conjugué complexe.

On peut remplacer $T_H$ et $T_G$ par leurs expressions (1-Z) et (1+Z). En propagation 2-D et 3-D, $T_H$ et $T_G$ dépendent donc de $f$ et k. On peut aussi estimer une puissance du bruit hydrophone et géophone dépendant de $f$ et k, $V_H(f,k)$ et $V_G(f,k)$, auquel cas $A(f,k) = V_H(f,k) / V_G(f,k)$ dépend aussi de $f$ et k.

Prenant la notation A pour A($f$) ou A($f$,k), (38) devient :

$$U = \frac{(1-\bar{Z}) \, H + A \, (1+\bar{Z}) \, G}{1 + |Z|^2 - Z - Z + A \, (A+|Z|^2 + Z + Z)} \tag{39}$$

On définit comme précédemment $U_R = ZU$. D'après (39), $U_R$ peut s'écrire :

$$U_R = \frac{-1}{\frac{A+1}{2}(1+|Z|^2)+\frac{A-1}{2}(Z+\bar{Z})}\ (\frac{|Z|^2-Z}{2}\ H-A\ \frac{|Z|^2+Z}{2}\ G) \tag{40}$$

Dans le cas de l'approximation 1-D, $Z = e^{2j\pi f\Delta t}$, $|Z|^2 = 1$.

Cette dernière propriété est également vrai en propagation 2-D et 3-D si on ne prend pas en compte les on'des évanescentes (qui se trouvent dans la partie du domaine $(\omega k)$ telle que $1-v^2k^2/\omega^2 < 0$). Or, en traitement sismique, on ne s'intéresse pas aux ondes évanescentes que l'on supprime habituellement sur les composantes hydrophones et géophones selon des techniques classiquement connues de l'Homme du Métier, qui ne seront pas ici décrites de façon plus détaillées. Pous la composante géophone, cette opération peut s'effectuer en même temps que la division par $\cos\theta$. On a donc $|Z|^2 = 1$ dans tous les cas, ce qui permet d'écrire :

$$U_R = \frac{-1}{A+1+\frac{A-1}{2}\ (Z+\bar{Z})}\ (\ \frac{1-Z}{2}\ H-A\ \frac{1+Z}{2}\ G) \tag{41}$$

Définissons le filtrage F(f) ou F(f,k) par :

$$F = \frac{A+1}{2} + \frac{A-1}{2}\ Z \tag{42}$$

Si A = 1, alors F = 1.

L'expression (41) de $U_R$ peut s'écrire, avec Re(F) = $(F+\bar{F})/2$ = partie réelle de F :

$$U_R = \frac{-1}{2Re(F)}\ [\frac{1-Z}{2}\ H-A\ \frac{1+Z}{2}\ G] \tag{43}$$

Dans le cas 1-D, 2Re(F) = [A(f)+1] + [A(f)-1]$\cos 2\pi f\Delta t$.

Soit la sortie M définie par :

$$M = \frac{1-Z}{2}\ H-A\ \frac{1+Z}{2}\ G \tag{44}$$

L'équation (43) signifie que M = -2Re(F)ZU si la source est nulle.

Si on considère la source, on obtient en remplaçant dans (44), H et G par leurs expressions (6) et (7) :

$$M = FS - 2Re(F)ZU \tag{45}$$

Le filtrage FS est une somme pondérée entre la source S et la source propagée aller-retour dans la couche d'eau.

Si le rapport signal-à-bruit de l'hydrophone et du géophone sont les mêmes pour chaque fréquence, on a A = 1, donc F = 1, et les équations (44) et (45) se réduisent aux équations (9) et (10).

## EXEMPLE DE MISE EN OEUVRE

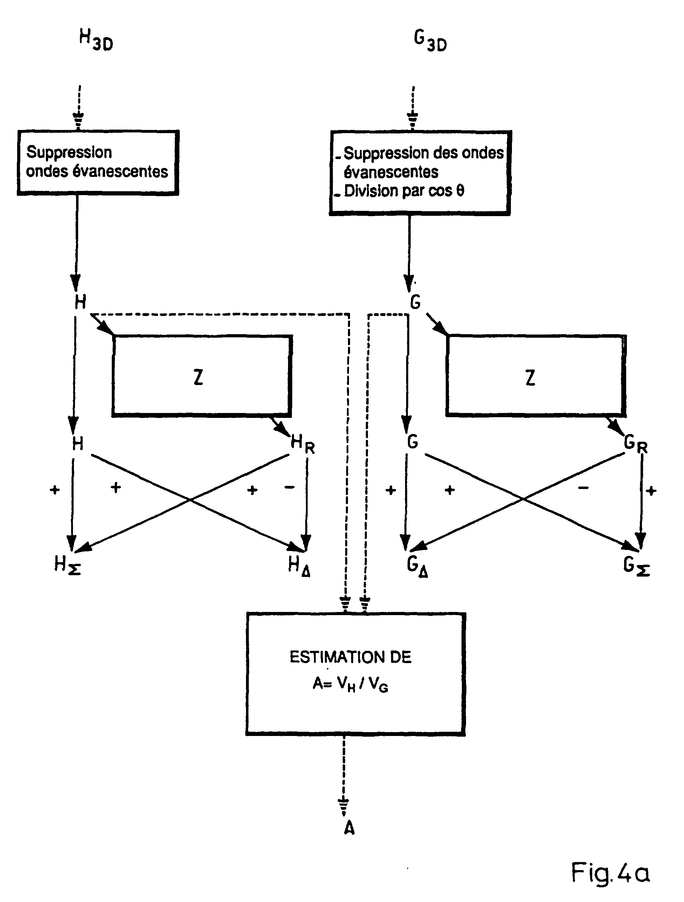

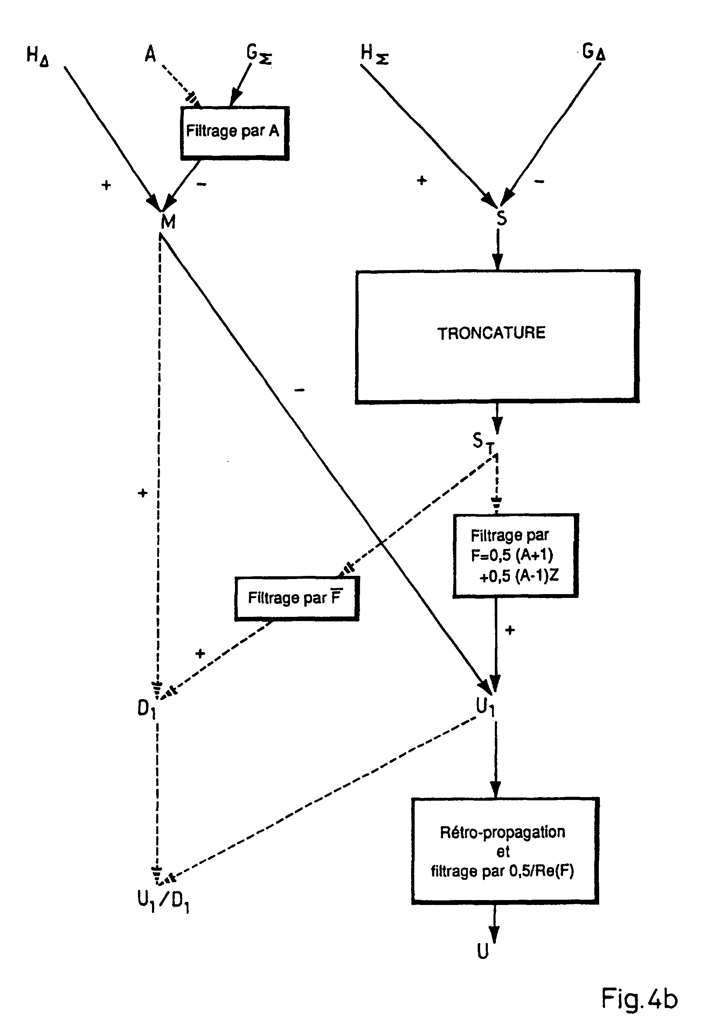

Dans le cas le plus général où A est différent de 1 et où on considère la nature tridimensionnelle de la propagation des ondes, un exemple de traitement sur les données calibrées comporte, ainsi qu'illustré sur les figures 4a et 4b, les étapes suivantes :

1) Pour chaque position de la source sismique, rassembler les données correspondant aux différentes positions récepteurs (collection sur chaque point de tir).

2) Supprimer les ondes évanescentes sur les données hydrophones.

3) Supprimer les ondes évanescentes et diviser leur amplitude par $\cos\theta$ sur les données géophones.

4) Estimer le rapport A (scalaire ou dépendant de f ou dépendant de f et de k) de la puissance du bruit hydrophone et du bruit géophone.

5) A l'aide d'un opérateur de propagation tridimensionnel Z, calculer les données $H_R$ et $G_R$ hydrophone et géophone propagées à travers un aller-retour (fond de l'eau-surface de l'eau-fond de l'eau) dans la couche d'eau.

6) Calculer les voies somme et différence hydrophone et géophone $H_\Sigma$, $H_\Delta$, $G_\Sigma$, $G_\Delta$.

7) Calculer la source retardée $S = H_\Sigma - G_\Delta$ et la source tronquée $S_T$ obtenue en annulant la trace d'indice i de la source estimée S pour les temps supérieurs à $T_1$. Pour chaque trace i, $T_i \geq MAX[T_E(i), T_P(i)]$ où $T_E(i) = \Delta T_S + (\Delta z(i)^2 + h(i)^2)^{1/2}/v$ est le temps d'extinction de la source, $\Delta z(i)$ étant la profondeur de l'eau pour la position récepteur de la trace et h(i) le décalage horizontal de la trace, c'est-à-dire la distance horizontale entre la position de la source et la position des récepteurs et où $T_p(i)$ est le temps au delà duquel les approximations de l'opérateur de propagation Z utilisé à l'étape 6) ainsi que celles de l'opérateur de renforcement des pendages de l'étape 3) sont acceptables.

8) Calculer la sortie intermédiaire M :

$$M = H_\Delta - AG_\Sigma \tag{46}$$

9) F étant le filtre :

$$F = \frac{A + 1}{2} + \frac{A - 1}{2} Z \tag{47}$$

Calculer l'onde montante retardée $U_R$ par :

$$U_R = \frac{FS_T - M}{2Re\,(F)} \tag{48}$$

10) Calculer l'onde montante U par :

$$U = \bar{Z}U_R \tag{49}$$

L'opération $\bar{Z}$ est une rétropropagation aller-retour dans la couche d'eau, c'est-à-dire un "datuming" fond de l'eau-surface de l'eau pour une onde supposée descendante suivi d'un datuming surface de l'eau-fond de l'eau pour une onde montante dont l'enregistrement en surface serait le résultat du premier calcul.

U représente les données sismiques sans l'onde fantôme récepteur.

U contient toujours la source sismique, l'onde fantôme source, les multiples peg-legs, mais ne contient plus ce qui fait la spécificité des données acquises au fond de l'eau, c'est-à-dire leur ghost récepteur. Ceci fait que la sortie U peut être traitée comme des données sismiques classiques.

On peut également profiter de la possibilité d'estimer les ondes descendantes D pour faire une déconvolution des ondes montantes U par les ondes descendantes D. Ceci permet d'enlever la source avec son ghost et les peg-legs. L'onde descendante D s'écrit :

$$D = S_T - U_R = \frac{\bar{F}S_T + M}{2Re(F)} \tag{50}$$

La déconvolution des ondes montantes par les ondes descendantes peut donc se faire en déconvoluant $\bar{Z}$ $(FS_T M)$ par $\bar{F}S_T + M$, ce qui évite le filtrage par $1/2Re(F)$. On remplace donc dans ce cas les étapes 9) et 10) par :

9') Calculer $U_1$ et $D_1$ par :

$$U_1 = FS_T - M, D_1 = \bar{F}S_T + M \tag{51}$$

10') Calculer une réflectivité $R_{ss}$ en déconvoluant les ondes montantes $U_1$ par les ondes descendantes $D_1$.

La réflectivité $R_{SS}$ est une réflectivité avec les sources et les récepteurs à la surface de l'eau. En effet :

$$R_{SS} = \frac{U_R}{D} = \frac{ZU}{D} = \frac{Z^{1/2}U}{Z^{1/2}D} = \frac{U_0}{D_0} \qquad (52)$$

$U_0$ et $D_0$ étant les ondes montantes et descendantes à la surface de l'eau.

La réflectivité $R_{SF}$ (figure 3o) avec les sources à la surface de l'eau et les récepteurs au fond de l'eau s'exprime avec l'onde descendante à la surface de l'eau et l'onde montante au fond de l'eau. Elle peut se calculer à partir de $R_{SS}$ :

$$R_{SF} = \frac{U}{D_0} = \frac{Z^{1/2}\,U_0}{D_0} = Z^{1/2}\,R_{SS} \qquad (53)$$

Cette déconvolution revient dans le cas 1-D à résoudre

$$R(t) * D(t) \simeq U(t) \qquad (54)$$

ou dans le cas 2-D ou 3D par

$$R(t,x) * D(t, x) \simeq U(t,x)$$

$$t,x$$

ou

$$R(t,x,y) * D(t,x,y) \simeq U(t,x,y)$$

$$t,x,y$$

la dimension (1,2 ou 3) utilisée pour la déconvolution de U par D n'étant pas forcément la même que celle utilisée pour le calcul de U et D.

## Revendications

1. Procédé de filtrage de prospection sismique marine au moyen d'au moins un couple de capteurs hydrophone/géophone disposés au fond de l'eau, dans lequel une source sonore à la surface de l'eau émet un signal acoustique et les capteurs au fond de l'eau relèvent des enregistrements hydrophone H et géophone G, **caractérisé en ce que** :

   - on détermine en fonction des enregistrements hydrophone H et géophone G un signal filtré M correspondant à

   $$M = H_\Delta - G_\Sigma$$

   où

   $$H_\Delta = \frac{H - H_R}{2}$$

   $$G_\Sigma = \frac{G + G_R}{2}$$

   $H_R$ et $G_R$ correspondant respectivement aux enregistrements H et G propagés à travers un aller-retour dans la couche d'eau

2. Procédé selon la revendication 1, **caractérisé en ce que**

   - on détermine en fonction des enregistrements hydrophone H et géophone G un signal S correspondant à $H_\Sigma$ - $G_\Delta$, où $H_\Sigma$ et $G_\Delta$ sont des données somme hydrophone et différence géophone telles que :

$$H_\Sigma = \frac{H+H_R}{2}$$

   et

$$G_\Delta = \frac{G-G_R}{2}$$

   - on tronque ce signal S dans une fenêtre temporelle au delà d'un temps théorique d'extinction de la source propagée à travers la couche d'eau jusqu'aux capteurs.

3. Procédé selon la revendication 2, **caractérisé en ce qu'**on détermine l'onde montante retardée en calculant

$$U_R = \frac{S_T - M}{2}$$

   où $S_T$ est le signal S tronqué,
   et **en ce qu'**on détermine l'onde montante juste au dessus du fond de l'eau à partir de l'onde montante retardée ainsi calculée.

4. Procédé selon l'une des revendications 2 et 3, **caractérisé en ce qu'**on détermine l'onde descendante juste au dessus du fond de l'eau en calculant

$$D = \frac{S_T + M}{2}$$

   où $S_T$ est le signal S tronqué.

5. Procédé selon les revendications 3 et 4 si dépendante de la revendication 3, **caractérisé en ce qu'**on calcule l'onde montante $U_1$, juste en dessous du fond de l'eau,

$$U_1 = U - k * D$$

   où * désigne l'opération de convolution, k étant une fonction de transfert du fond de l'eau calculée de façon à minimiser l'énergie de $U_1$ sur une fenêtre temporelle donnée.

6. Procédé selon les revendications 4 et 5, **caractérisé en ce qu'**on déconvolue l'onde montante calculée par l'onde descendante calculée.

7. Procédé selon l'une des revendications précédentes, **caractérisé en ce que** les données hydrophone et géophone $H_R$, $G_R$ sont déterminées en appliquant un opérateur de propagation bi- ou tridimensionnel aux enregistrements hydrophone et géophone H et G et **en ce que** on corrige préalablement les enregistrements géophone en divisant leur amplitude par $\cos\theta$,
   où

$$\cos\theta = \overline{\sqrt{1-v^2 k^2/\omega^2}}$$

v étant la vitesse du son dans l'eau, $\omega = 2\pi f$, où f est la fréquence de la source, k son nombre d'onde.

8. Procédé selon la revendication 7, **caractérisé en ce que** l'on supprime les ondes évanescentes sur les enregistrements géophone simultanément à leur correction par division d'amplitude.

9. Procédé selon l'une des revendications précédentes, dans lequel on détermine un signal filtré M correspondant à

$$M = H_\Delta - AG_\Sigma$$

où A est le rapport de la puissance du bruit de l'hydrophone sur la puissance de bruit du géophone.

10. Procédé selon la revendication 9, **caractérisé en ce qu'**on détermine un filtrage correspondant à F tel que

$$F = \frac{A+1}{2} + \frac{A-1}{2} Z$$

et on calcule l'onde montant retardée par

$$U_R = \frac{FS_T - M}{2Re(F)}$$

Où $S_T$ est le signal S tronqué.

11. Procédé selon la revendication 10, **caractérisé en ce qu'**on calcule l'onde descendante par

$$D = \frac{\bar{F}S_T + M}{2Re\,(F)}$$

12. Procédé selon l'une des revendications précédentes, dans lequel pour déterminer M et/ou S, on prend :

$$H_\Sigma = \frac{H + rH_R}{2}$$

$$H_\Delta = \frac{\bar{r}H - H_R}{2}$$

$$G_\Sigma = \frac{r\bar{G} + G_R}{2}$$

$$G_\Delta = \frac{G - rG_R}{2}$$

Où -r est la fonction de transfert de la surface de l'eau, $\bar{r}$ le conjugué complexe de r.

**Patentansprüche**

1. Filterungsverfahren zur seismischen Meererkundung mit wenigstens einem Hydrophon/Geophon-Wandlerpaar, die am Wassergrund angeordnet sind, bei dem eine Schallquelle an der Wasseroberfläche ein akustisches Signal aussendet und die Wandler am Wassergrund hydrophone H und geophone G Aufzeichnungen aufnehmen, **dadurch gekennzeichnet, daß**:

- abhängig von den hydrophonen H und geophonen G Aufzeichnungen ein gefiltertes Signal M bestimmt wird, entsprechend

$$M = H_\Delta - G_\Sigma$$

wobei

$$H_\Delta = \frac{H - H_R}{2}$$

$$G_\Sigma = \frac{G + G_R}{2}$$

und $H_R$ und $G_R$ Aufzeichnungen H bzw. G entsprechen, die die Wasserschicht hin und zurück durchquert haben.

2. Verfahren nach Anspruch 1, **dadurch gekennzeichnet, daß**

- abhängig von den hydrophonen H und geophonen G Aufzeichnungen ein Signal S bestimmt wird, entsprechend $H_\Sigma - G_\Delta$, wobei $H_\Sigma$ und $G_\Delta$ hydrophone Summendaten und geophone Differenzdaten von folgender Art sind:

$$H_\Sigma = \frac{H + H_R}{2}$$

*und*

$$G_\Delta = \frac{G - G_R}{2}$$

- dieses Signal S in einem Zeitfenster jenseits einer theoretischen Auslöschzeit der durch die Wasserschicht bis zu den Wandlern hindurch ausgebreiteten Quelle abgeschnitten wird.

3. Verfahren nach Anspruch 2, **dadurch gekennzeichnet, daß** die verzögerte aufsteigende Welle bestimmt wird, indem

$$U_R = \frac{S_T - M}{2}$$

berechnet wird, wobei $S_t$ das abgeschnittene Signal S ist, und daß die aufsteigende Welle knapp oberhalb des Wassergrunds ausgehend von der so berechneten verzögerten aufsteigenden Welle bestimmt wird.

4. Verfahren nach einem der Ansprüche 2 und 3, **dadurch gekennzeichnet, daß** die absinkende Welle knapp oberhalb des Wassergrunds bestimmt wird, indem

$$D = \frac{S_T + M}{2}$$

berechnet wird, wobei $S_T$ das abgeschnittene Signal S ist.

5. Verfahren nach den Ansprüchen 3 und 4, soweit abhängig vom Anspruch 3, **dadurch gekennzeichnet, daß** die aufsteigende Welle $U_1$ knapp unterhalb des Wassergrunds berechnet wird,

$$U_1 = U - k*D,$$

wobei * die Faltungsoperation bezeichnet, k eine Übertragungsfunktion des Wassergrunds ist, die derart berechnet ist, daß die Energie $U_1$ in einem vorgegebenen Zeitfenster minimiert wird.

6. Verfahren nach den Ansprüchen 4 und 5, **dadurch gekennzeichnet, daß** die aufsteigende Welle entfaltet wird, die durch die berechnete absinkende Welle berechnet ist.

7. Verfahren nach einem der vorhergehenden Ansprüche, **dadurch gekennzeichnet, daß** die hydrophonen und geophonen Daten $H_R$, $G_R$ bestimmt werden, indem ein zwei- oder dreidimensionaler Ausbreitungsoperator an den hydrophonen und geophonen Aufzeichnungen H und G angewandt wird, und daß die geophonen Aufzeichnungen zuvor korrigiert werden, indem ihre Amplitude durch $\cos\theta$ geteilt wird,
wobei

$$\cos\theta = \sqrt{1 - v^2 k^2 / \omega^2}$$

v die Schallgeschwindigkeit im Wasser ist, $\omega = 2\pi f$, f die Frequenz der Quelle ist, und k deren Wellenzahl.

8. Verfahren nach Anspruch 7, **dadurch gekennzeichnet, daß** die räumlich gedämpften Wellen in den geophonen Aufzeichnungen gleichzeitig mit deren Korrektur durch die Amplitudenteilung unterdrückt werden.

9. Verfahren nach einem der vorhergehenden Ansprüche, bei dem ein gefiltertes Signal M bestimmt wird, entsprechend

$$M = H_\Delta - AG_\Sigma$$

wobei A das Verhältnis der Rauschleistung des Hydrophons zur Rauschleistung des Geophons ist.

10. Verfahren nach Anspruch 9, **dadurch gekennzeichnet, daß** eine Filterung bestimmt wird, die F entspricht, derart

$$F = \frac{A+1}{2} + \frac{A-1}{2} Z$$

und die verzögerte aufsteigende Welle als

$$U_R = \frac{FS_T - M}{2\mathrm{Re}(F)}$$

berechnet wird, wobei $S_T$ das abgeschnittene Signal S ist.

11. Verfahren nach Anspruch 10, **dadurch gekennzeichnet, daß** die absinkende Welle als

$$D = \frac{\bar{F}S_T + M}{2\mathrm{Re}(F)}$$

berechnet wird.

12. Verfahren nach einem der vorhergehenden Ansprüche, bei dem für die Bestimmung von M und/oder S

$$H_\Sigma = \frac{H + rH_R}{2}$$

$$H_\Delta = \frac{\bar{r}H - H_R}{2}$$

$$G_\Sigma = \frac{\bar{r}G + G_R}{2}$$

$$G_\Delta = \frac{G - rG_R}{2}$$

herangezogen werden, wobei -r die Übertragungsfunktion der Wasseroberfläche ist, und $\bar{r}$ das konjugiert Komplexe von r ist.

**Claims**

1. A filtering method for seismic prospecting offshore by means of at least one pair of hydrophone-geophone sensors disposed at the water bottom, in which a sound source at the surface of the water emits a sound signal and the sensors at the water bottom take hydrophone and geophone recordings H and G, the method being **characterized in that**:

   · a filtered signal M is determined as a function of the hydrophone and geophone recordings H and G, where the filtered signal corresponds to:

   $$M = H_\Delta - G_\Sigma$$

   where

   $$H_\Delta = \tfrac{1}{2}(H - H_R)$$

   and

   $$G_\Sigma = \tfrac{1}{2}(G + G_R)$$

   $H_R$ and $G_R$ correspond respectively to the recordings H and G propagated over a go-and-return path through the layer of water.

2. A method according to claim 1, **characterized in that**:

   · a signal S is determined as a function of the hydrophone and geophone recordings H and G, where the signal S corresponds to $H_\Sigma - G_\Delta$, where $H_\Sigma$ and $G_\Delta$ are hydrophone sum and geophone difference data such that:

   $$H_\Sigma = \tfrac{1}{2}(H + H_R)$$

   and

   $$G_\Delta = \tfrac{1}{2}(G - G_R);$$

and
- said signal S is truncated in a time window beyond the theoretical extinction time of the source propagated through the layer of water to the sensors.

3. A method according to claim 2, **characterized in that** a retarded up wave is determined by calculating:

$$U_R = \tfrac{1}{2}(S_T - M)$$

where $S_T$ is the truncated S signal; and **in that** the up wave is determined immediately above the water bottom from the retarded up wave calculated in this way.

4. A method according to claim 2 or 3, **characterized in that** the down wave immediately above the water bottom is determined by calculating:

$$D = \tfrac{1}{2}(S_T + M)$$

where $S_T$ is the truncated S signal.

5. A method according to claims 3 and 4 if dependent on claim 3, **characterized in that** the up wave $U_1$ is calculated immediately beneath the bottom of the water as follows:

$$U_1 = U - k*D$$

where * designates the convolution operation, $\underline{k}$ being a water bottom transfer function calculated so as to minimize the energy of $U_1$ in a given time window.

6. A method according to claims 4 and 5, **characterized in that** the calculated up wave is deconvoluted by the calculated down wave.

7. A method according to any preceding claim, **characterized in that** the hydrophone and geophone data $H_R$, $G_R$ is determined by applying a two- or three-dimensional propagation operator to the hydrophone and geophone recordings H and G, and **in that** the geophone recordings are previously corrected by dividing the amplitude thereof by $\cos\theta$ where

$$\cos\theta = \sqrt{1 - v^2 k^2/\omega^2}$$

$\underline{v}$ being the speed of sound in the water, $\omega = 2\pi f$, where $\underline{f}$ is the frequency of the source, and $\underline{k}$ is its wave number.

8. A method according to claim 7, **characterized in that** the evanescent waves are eliminated from the geophone recordings simultaneously with the amplitude of the recordings being corrected by division.

9. A method according to any preceding claim, in which a filtered signal M is determined corresponding to:

$$M = H_\Delta - AG_\Sigma$$

where A is the ratio of hydrophone noise power over geophone noise power.

10. A method according to claim 9, **characterized in that** filtering corresponding to F is determined such that:

$$F = \tfrac{1}{2}(A + 1) + \tfrac{1}{2}(A - 1)Z$$

and the retarded up wave is calculated from:

$$U_R = \frac{FS_T\text{-}M}{2Re(F)}$$

where $S_T$ is the truncated S signal.

**11.** A method according to claim 10, **characterized in that** the down wave is calculated from:

$$D = \frac{\bar{F}S_T\text{-}M}{2Re(F)}$$

**12.** A method according to any preceding claim, in which in order to determine M and/or S, use is made of the following:

$$H_\Sigma = \tfrac{1}{2}(H + rH_R)$$

$$H_\Delta = \tfrac{1}{2}(\bar{r}H - H_R)$$

$$G_\Sigma = \tfrac{1}{2}(\bar{r}G + G_R)$$

$$G_\Delta = \tfrac{1}{2}(G - rG_R)$$

where -r is the transfer function of the water surface, and $\bar{r}$ is the complex conjugate of r.

Fig.1

Fig.2

RP        RMF

H        Fig. 3a

G        Fig. 3b

$H_R$        Fig. 3c

$G_R$        Fig. 3d

$H_\Sigma$        Fig. 3e

$H_\Delta$        Fig. 3f

$G_\Sigma$        Fig. 3g

$G_\Delta$        Fig. 3h

S    Fig.3i

$s_T$    Fig.3j

M    Fig.3k

$u_R$    Fig.3l

U    Fig.3m

D    Fig.3n

$\bar{Z}^{in} u_R / D$

Fig.3o

Fig. 4a

Fig.4b